# EUROPEAN PATENT APPLICATION

(11) **EP 2 324 715 A1**
(43) Date of publication of application: **25.05.2011**
(21) Application number: 09811384.8
(22) Date of filing: 12.08.2009
(51) Int. Cl.: A23C 9/15, A23F 5/24, A23L 2/38

(54) **MILK-CONTAINING DRINK COMPRISING MILK COMPOSITION HAVING REDUCED MILK SERUM PROTEIN CONTENT**

(30) Priority: 05.09.2008 JP 2008227858
(71) Applicant: Suntory Holdings Limited, Kita-ku, Osaka-shi Osaka 530-8203 (JP)
(72) Inventor: NAKATA, Aki, Tokyo 135-8631 (JP); YOKOO, Yoshiaki, Kawasaki-shi Kanagawa 211-0067 (JP)
(74) Representative: Vossius & Partner
(86) International application number: PCT/JP2009/064219
(87) International publication number: WO 2010/026855

(57) **Abstract**

The present invention provides a new means by which milk-added beverages, in particular, milk-added coffee beverages can be prevented from developing the peculiar slack or dull flavor after heat sterilization. Specifically, the invention provides milk compositions with a reduced proportion of whey protein(s) / milk protein(s), as well as milk beverages with a reduced whey protein content.

## Description

### TECHNICAL FIELD

The present invention relates to milk compositions in which the content of whey protein(s) in all of milk protein(s) is reduced, and a process for producing such milk compositions. The invention also relates to milk-added coffee beverages that have a reduced whey protein content, that are suppressed in potential flavor deterioration or development of the slack, limp or dull flavor after heat sterilization treatment, and which are stable and rich in flavor, as well as a process for producing such milk-added coffee beverages.

### BACKGROUND ART

Milk-added beverage products that use a milk component as a starting material and which are manufactured by a process involving a heat sterilization step generally include canned, PET bottled, and paper container types as classified by container, and various kinds of products are known.

The common steps in the manufacture of canned milk-added coffee beverages, which are an example of milk-added beverages, consist of roasting of coffee beans, grinding of the roasted coffee beans, extraction, formulation, filtration, filling into cans, seaming of the cans, sterilization, refrigeration, and case packing.

One of the critical steps for ensuring product quality in the manufacture of milk-added beverages including milk-added coffee beverages is the sterilization step. In the sterilization step, heat sterilization is usually carried out at 125 °C for 20 minutes in 190-g cans (Patent Document 1).

However, one of the major problems with the milk-added coffee beverages is that they develop the characteristic slack and dull flavor after heat sterilization, thus impairing the fresh feel of milk and the inherent flavor of coffee.

According to Patent Document 2, sodium bicarbonate, disodium hydrogen phosphate and the like have conventionally been used to cope with the time-dependent deterioration in the flavor of beverages after heat sterilization, but the use of these compounds causes a salty taste, the slack, and a dull taste. Patent Document 2 also proposes a means of solving this problem; it comprises the use of a pH modifier for beverages that contains as an active ingredient a water-soluble substance that is produced by ashing terrestrial plant materials which assume alkalinity, and it is reported that the amount of sodium bicarbonate was reduced and that yet the problems of salty taste, the slack, and dull taste could be dissolved. However, the production of the water-soluble substance by ashing terrestrial plant materials has involved a complex procedure.

In another known method, L-cystine and/or L-cysteine is used in order to prevent browning that might occur during the heat treatment of raw milk (Patent Document 3); but it is also known that products to which L-cysteine or L-cystine has been added occasionally give off a peculiar odor due to those compounds, or that they are sometimes tinged with yellow (Patent Document 4).

Thus, the heretofore known methods, although they have their own good features, are not completely satisfactory as a means for preventing the deterioration of milk flavor and other problems that might occur as the result of heating.

### CITATION LIST

### PATENT LITERATURE

PTL 1: Official Gazette of JP 2002-186425 A
PTL 2: Official Gazette of JP 9-9935 A
PTL 3: Official Gazette of JP 2-207742 A
PTL 4: Official Gazette of JP 64-5863 B

### SUMMARY OF INVENTION

### TECHNICAL PROBLEM

Therefore, an object of the present invention is to provide a new means for preventing the unpleasing aftertaste of milk-added beverages, in particular, milk-added coffee beverages, that might result from heat sterilization. The unpleasing aftertaste typically refers to the peculiar slack, the undesirable taste that may be sensed after drinking, the dull taste after drinking, and other defects.

### SOLUTION TO PROBLEM

With a view to solving the above-mentioned problems, the present inventors made an intensive study about the possible causes of the slack and dull flavor that are peculiar to milk-added beverages subjected to heat sterilization; surprisingly enough, the present inventors found that whey protein(s) among various milk ingredients were a main factor in the development of the slack and other troubles during the step of heat sterilization, and that it was important to reduce the content of the protein.

The mechanism for the development of unpleasing flavor due to whey protein(s) was reviewed in the Examples; the results show that whey protein(s) were more likely to be denatured than other ingredients during the treatment by heat processing, and this suggests the possibility for the denatured whey protein(s) to contribute to the unpleasing aftertaste. As a matter of fact, the samples prepared in Example 2 which contained no whey protein had a satisfactory flavor after heating. On the other hand, if the amount of milk ingredients other than whey proteins, in particular, milk proteins such as casein proteins was reduced, the inherent flavor and richness of milk would decrease markedly. These findings have enabled the production of milk-added coffee beverages that are less unpleasing in aftertaste, that are stable, and which are rich in flavor.

Thus, the present invention relates to the following.
1. A milk composition that contains milk protein(s), in which the proportion of all of whey protein(s) in all of the milk protein ingredient(s) is from zero to 18 mass% (excluding the case where the milk ingredient(s) consist only of casein protein(s)).
2. The milk composition as recited in 1, wherein the proportion of all of the whey protein(s) in all of the milk protein ingredient(s) is from zero to 10 mass%.
3. The milk composition as recited in 1, wherein the proportion of all of the whey protein(s) in all of the milk protein ingredient(s) is from zero to 5 mass%.
4. The milk composition as recited in 1 to 3, which further contains one, two or more members of the group consisting of lactose, milk fats, and whey minerals.
5. A process for producing the milk composition as recited in any one of 1 to 4, which is obtained by homogenizing in water one, two or more members of the group consisting of casein proteins, whey proteins, lactose, milk fats, and whey minerals.
6. A milk-added beverage produced by using the milk composition as recited in any one of 1 to 4 as a starting material.
7. A milk-added beverage containing the milk composition as recited in any one of 1 to 4.
8. The milk-added beverage as recited in 6 or 7, which has been subjected to heat sterilization.
9. The milk-added beverage as recited in any one of 6 to 8, which has a total whey protein content of no more than 0.46 mass%.
10. The milk-added beverage as recited in any one of 6 to 9, which is a milk-added coffee beverage with a coffee component.
11. A milk-added beverage, in which the proportion of all of whey protein(s) in all of milk protein ingredient(s) is no more than 18 mass%.
12. The milk-added beverage as recited in 11, which has a total whey protein content of no more than 0.46 mass%.
13. The milk-added beverage as recited in 11 or 12, which is a milk-added coffee beverage with a coffee component.
14. The milk-added coffee beverage as recited in any one of 11 to 13, which has been subjected to heat sterilization.
15. A process for producing a milk-added beverage, which comprises adjusting the proportion of whey protein(s) in all of milk protein ingredient(s) to no more than 18 mass%.
16. A method of preventing deterioration of the flavor of a milk-added beverage, which comprises adjusting the proportion of whey protein(s) in all of milk protein ingredient(s) to no more than 18 mass%.

### ADVANTAGEOUS EFFECTS OF INVENTION

Milk-added beverages that use the milk composition of the present invention with a reduced content of whey protein(s) in all of milk protein(s) among milk ingredients are comparable to beverages that use ordinary milk materials in terms of color, smell and taste, or alternatively, they are satisfactory in flavor and the like as compared with conventional beverages. Further, the reduced content of whey protein(s) contribute to preventing the beverages from deteriorating in flavor or developing unpleasing aftertaste such as the slack or limp taste after heat sterilization. In particular, when the total content of milk ingredients as calculated in terms of solids content is between 3.0 and 7.0 mass%, the difference in flavor from what is obtained by the conventional process is quite marked, and this enables the production of beverages with a good finish (refreshing aftertaste) that offer the inherent, satisfactory flavor of milk-added beverages.

### BRIEF DESCRIPTION OF DRAWINGS

FIG. 1 is a bar graph showing how ingredients in milk beverages affected their flavor.
FIG. 2 is a bar graph showing the effect of milk ingredients on flavor.
FIG. 3 is a set of bar graphs showing the results of flavor evaluation performed with varying proportions of a whey protein and a casein protein.

### DESCRIPTION OF EMBODIMENTS

The milk composition of the present invention is obtained from the milk of mammals (cow, sheep and goat), in particular, cow, or from dairy products, and it contains at least milk protein(s) as a milk ingredient. Milk proteins consist mainly of casein proteins and whey proteins. Casein proteins include αs₁-,αs₂-, β-, and κ-forms, which make up micelles as a complex in the milk. Whey proteins refer to proteins such as β-lactoglobulin, α-lactoalbumin, serum albumin, and lactoferrin.

In the milk composition of the present invention, the proportion of all of whey protein(s) in all of the milk protein(s) mentioned above is 0-18 mass%, preferably 0-10 mass%, and more preferably 0-5 mass%. It should, however, be noted that milk compositions in which milk ingredient(s) consist only of casein protein(s) are excluded from the scope of the milk composition of the present invention.

The milk composition of the present invention may further contain one, two or more, preferably all of milk ingredients other than milk proteins that are commonly contained in milk, as exemplified by milk fats, lactose, and whey minerals. Preferably, casein protein(s) may be combined with milk fat(s), and the addition of lactose as a third ingredient will contribute to a richer flavor. The total amount of milk protein(s) in the milk composition and the total amount of whey protein(s) in it can be measured by any of the known methods including the Kjeldahl method.

To produce such milk compositions, any of the known methods may be used. Examples that can be used include: a method in which one, two or more ingredients selected from among casein proteins, whey proteins, lactose, milk fats, and whey minerals (casein protein(s) being preferably combined with milk fat(s), more preferably further combined with lactose), preferably all the ingredients listed above, are rendered uniform in suitable proportions in water and then reduced; a method in which whey protein(s) are selectively removed by filtration through MF (membrane filter) or UF (ultrafiltration filter), treatment with an ion exchanger, or other techniques; and a method in which a weak acid such as vinegar is added to cow milk to lower its pH to 4.6 and the resulting precipitate is recovered. Examples of these methods are described in the official gazette of JP 6-62756 A (a method that uses an anion exchanger) and in the official gazette of JP 9-509320 A (a method involving the steps of sulfitization and oxidation, as well as precipitation at pH in the acidic range, and the like.)

The milk composition of the present invention may be in a powder form or a liquid. Hence, the aforementioned step of rendering the ingredients uniform need not necessarily be performed in water, and a mixture in power form that is obtained by mixing the aforementioned ingredients is also included in the scope of the milk composition of the present invention. In addition, the milk obtained by selective removal of whey protein(s) in the second method mentioned above may be additionally processed before it is put to use. For example, one or more members of the group consisting of the milk proteins, milk fats, lactose and minerals may be added or removed or, alternatively, they may be concentrated or diluted.

In addition to the aforementioned milk ingredients, the milk composition of the present invention may contain any additives or any ingredients that are used in common foods or beverages, provided that they will not affect the flavor or taste of the composition. Examples of such additives and/or ingredients include sweeteners, flavorings, minerals, and nutrients, as well as substances that are incorporated in formulating procedures, as exemplified by excipients (including water), binders, emulsifiers, tonicity agents (isotonization agents), buffers, solubilizing agents, antiseptics, stabilizers, antioxidants, coloring agents, and coagulants.

As used herein, the "milk-added beverage" refers to beverage products produced using a milk component as a starting material, preferably through the step of heat sterilization; the milk-added beverage is preferably exemplified by beverages packaged in containers.

Milk-added beverages include milk-added coffee beverages with a coffee component, milk-added tea beverages with a tea component, milk with fruit taste, cocoa, soup, etc.

The type of products is not particularly limited; to give some examples of milk-added coffee beverages, they include "coffee," "coffee beverages," and "coffee-added soft drinks," in particular, those which are "milk-added", as defined in the Fair Competition Rules on Labeling of Coffee Beverages and Others that was approved in 1977. Beverages produced with a coffee component as a raw material, if they have a milk ingredient content of at least 3.0% by mass in terms of a solids content, are subject to the Fair Competition Rules on Labeling of Drinkable Milk and are dealt with as "milk beverages," which are also included in the scope of the milk--added coffee beverage of the present invention.

The term "milk component" as used in association with beverages in the present invention refers to a component that is added to beverages in order to impart milk flavor or milk texture, and mainly covers milk (e.g., cow milk, sheep milk, and goat milk), as well as dairy products. Examples include raw milk, cow milk, special cow milk, partially defatted milk, skim milk, processed milk, milk beverages, etc.; exemplary dairy products include cream, concentrated whey, concentrated milk, concentrated skim milk, sugar-free condensed milk, sweetened condensed skim milk, total milk powder, skim milk powder, cream powder, whey powder, buttermilk powder, modified dry milk, etc. Cow milk is desirably used from the viewpoint of flavor. Fermented milk and lactic acid bacteria beverages may also be mentioned as the milk.

The content of milk component(s) in the beverages of interest is not particularly limited and is preferably 0.1-10 mass%, more preferably 1.0-7.0 mass%, and even more preferably 3.0-7.0 mass%, in terms of a solids content. Here, the term "solids content" refers to a dry material that remains after drying the milk component by a common drying method (lyophilization, evaporation to dryness, or the like) to remove its moisture.

In the milk-added beverage of the present invention, the proportion of whey protein(s) in all of milk protein(s) is 0-18 mass%, preferably 0-10 mass%, and more preferably 0-5 mass%. In addition, it is also preferred that the beverage of interest has a small content of whey protein(s). Typically, the total content of whey protein(s) in the beverage of the present invention is no more than 0.46 mass%.

To produce the milk-added beverage of the present invention, the milk composition of the present invention may be substituted for all or part of milk component(s) as a starting material. For instance, the milk composition of interest may be contained as a milk component in a beverage, optionally followed by heat sterilization. Alternatively, in place of the milk composition of interest, one, two or more milk ingredient(s) selected from among casein proteins, whey proteins, lactose, milk fats and whey minerals may be incorporated in suitable amounts in a beverage.

In addition to a milk component, the beverage of the present invention may have a variety of ingredients incorporated in it to suit specific consumers' taste.

For instance, milk-added coffee beverages have a coffee component incorporated therein. The term "coffee component" as used herein refers to solutions containing ingredients derived from coffee beans, as typically exemplified by coffee extracts, or solutions obtained by extracting roasted and ground coffee beans with cold or warm water. Other examples of the coffee component include coffee solutions prepared by a process in which a product such as a coffee extract obtained by concentrating a liquid coffee extract or an instant (soluble) coffee obtained by drying a liquid coffee extract is conditioned with cold or warm water to make a suitable volume. Note that whey proteins are absent from the coffee ingredients.

The cultivated species of coffee beans as a raw material is not particularly limited, and may be exemplified by such species as Arabica, Robusta, Liberica, etc; the variety is not particularly limited, either, and may be exemplified by Mocha, Brazil, Colombia, Guatemala, Blue Mountain, Kona, Mandelin, Kilimanjaro, etc.

The degree of roast (as represented by three basic levels in the order of light roast, medium roast, and dark roast) is not particularly limited, either, and unroasted green coffee beans may also be used. Further, coffee beans of two or more varieties may also be used in a blend.

The degree of grinding roasted coffee beans (as classified into coarse grinding, medium grinding, fine grinding, etc.) is not particularly limited, either, and ground beans of different particle size distributions may be used for extraction with various types of extractors (drip type, siphon type, boiling type, jet type, continuous type, etc.) using cold or warm water or the like. The higher the temperature for extracting roasted coffee beans and the higher the degree of extracting the coffee component, the greater the tendency for a precipitate to form upon heat sterilization; however, the temperature condition and the degree of extraction are not particularly limited.

The content of the coffee component in the milk-added coffee beverage is not particularly limited, and is preferably 0.1-10 mass% in terms of a solids content. Here, the term "solids content" refers to a dry material that remains after drying the coffee component by a common drying method (lyophilization, evaporation to dryness, or the like) to remove its water content.

A sweet constituent may also be incorporated in the beverage of the present invention. The "sweet constituent" as used herein refers to any ingredient that exhibits sweetness. Examples include sucrose, isomerized glucose, glucose, fructose, lactose, maltose, xylose, isomerized lactose, fructooligosaccharide, maltooligosaccharide, isomaltooligosaccharide, galactooligosaccharide, coupling sugar, paratinose, maltitol, sorbitol, erythritol, xylitol, lactitol, palatinit, a saccharified reduced-starch, stevia, glycyrrhizin, thaumatin, monellin, aspartame, alitame, saccharin, acesulfame K, sucralose, dulcin, and the like.

Whether the sweet constituent should be added, how much it should be added, and when it should be added may be determined as appropriate for the commercial product to be designed, and are not particularly limited. In particular, the case where no sweet constituent is added, the case where a sweet constituent is substantially absent, and the case where the beverage is only lightly sweetened are preferred modes of the present invention in which a flavor improvement is realized, since the flavor inherent in the beverage, in particular, coffee can be sensed by the tongue witout being affected by the sweetness.

In addition, other ingredients may be appropriately added to the beverage of the present invention in order to confer any characteristics that are necessary or desirable for the milk-added beverage. Such other ingredients include antioxidants (e.g. sodium erythorbate), flavorings (e.g. coffee flavorings and milk flavorings), and water (e.g. ionexchange water, pure water, and natural water).

In the present invention, heat sterilization methods may involve retort sterilization, hot packing, sterile packing, and so forth, but they are not particularly limited, and sterilization conditions may be set as appropriate for the properties of the contents, the container, and other factors.

Containers for the milk-added beverage are not particularly limited, and may include cans, PET bottles, glass bottles, paper packs, etc.

### EXAMPLES

On the following pages, the present invention will be specifically explained by reference to examples, but it should be understood that the present invention is by no means limited to the examples.

### Example 1

Milk-added coffee beverages were used in a study for identifying the possible cause of the peculiar slack that developed in milk-added beverages after heat sterilization. To locate the primary cause, samples of coffee beverages were provided according to recipes that lacked particular ingredients, as shown in Table 1 below. The emulsifiers used were glycerin fatty acid esters and sucrose fatty acid esters.

**Table 1. Coffee Beverages (Pre-production samples)**

| | Starting Materials Contained | | | |
|---|---|---|---|---|
| Sample No. | Emulsifier | Cow milk | Sugar | Coffee |
| NO. 1 | ○ | ○ | ○ | ○ |
| NO. 2 | x | ○ | ○ | ○ |
| NO. 3 | x | x | ○ | ○ |
| NO. 4 | x | x | x | ○ |

| | | | | |
|---|---|---|---|---|
| (○: Added; x: Not added) | | | | |

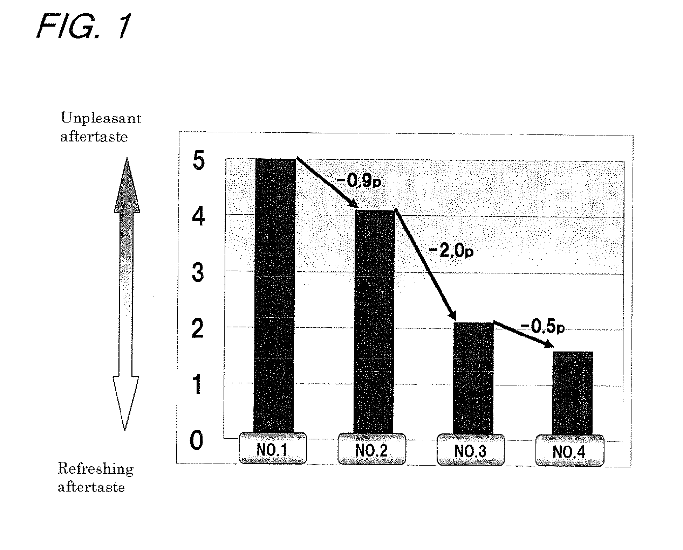

After being heat sterilized, these samples were subjected to sensory evaluation through a blind test by five organoleptic panelists. The unpleasantness of aftertaste of the samples was evaluated in five grades, the sample with the worst aftertaste being given five points; the results are shown in FIG. 1 in terms of the average for the five panelists.
As FIG. 1 shows, the most marked improvement in flavor was achieved when the cow milk content was decreased (from sample No. 2 to sample No. 3). This indicates high contribution of cow milk to the change in flavor after heat sterilization. Thus, it was found that an ingredient in cow milk was significantly involved in the change in flavor after heat sterilization.

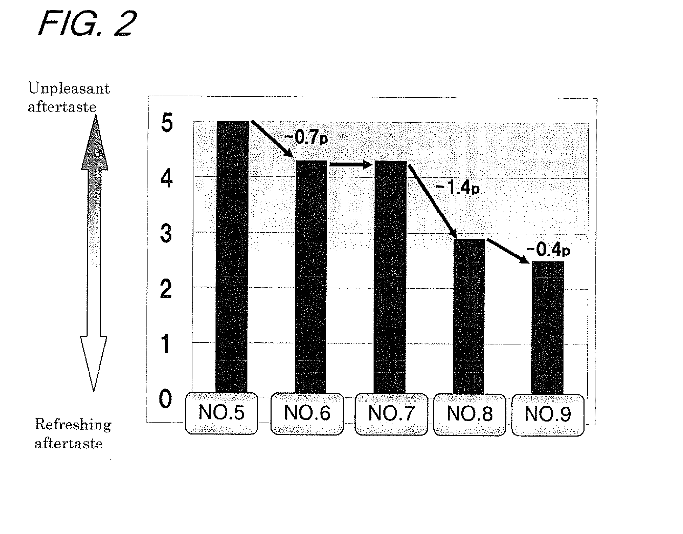

In the next experiment, No. 4 beverage was modified by replacing the cow milk with the milk ingredients listed in Table 2 below, whereby sample Nos. 5 to 9 were prepared; after heat sterilization, these samples were evaluated for their flavor. The method of evaluation was the same as in the experiment of FIG. 1. The results are shown in FIG. 2. Note that the milk fat used in the second experiment was fresh cream, the milk protein was casein sodium, and the mineral was whey minerals mainly consisting of calcium.

**Table 2. Milk Ingredients Contained in Beverage Samples**

| | Ingredients Contained | | | |
|---|---|---|---|---|
| Sample No. | Milk fat | Lactose | Milk Protein | Mineral |
| NO. 5 | ○ | ○ | ○ | ○ |
| NO. 6 | x | ○ | ○ | ○ |
| NO. 7 | x | x | ○ | ○ |
| NO. 8 | x | x | x | ○ |
| No. 9 | x | x | x | x |

| | | | | |
|---|---|---|---|---|
| (○: Added; x: Not added) | | | | |

As can be seen from the results shown in FIG. 2, flavor changed most markedly when the milk protein content was decreased (from sample No. 7 to sample No. 8), and this indicates high contribution of milk proteins to the change in flavor after heat sterilization. Thus, it was found that the protein ingredients in cow milk were significantly involved in the flavor change for the worse after heat sterilization.

In the next experiment, the milk ingredients indicated in Table 3 below were dissolved in water to prepare 1% aqueous solutions, which were then evaluated for their flavor; thereafter, the solutions were retort sterilized (125 °C x 20 min) and again evaluated for their flavor. The method of evaluation was the same as in the experiment of FIG. 1. The results of flavor evaluation are also shown in Table 3. The aftertaste was the worst in the evaluation on the whey protein.

**Table 3**

| | Whey minerals | Milk fat | Casein sodium | Whey protein | Lactose |
|---|---|---|---|---|---|
| Before sterilization | 1 | 1 | 1 | 1 | 1 |
| After sterilization | 1.1 | 1 | 1.5 | 4 | 1.2 |
| Comments | Slightly Salty. | Barely Changed. | Heavy flavour but no change in taste. | Strong smell of deterioration, with flavor lingering on the tongue. Precipitation also occurred. | Barely changed, except slight increase in stringency. |

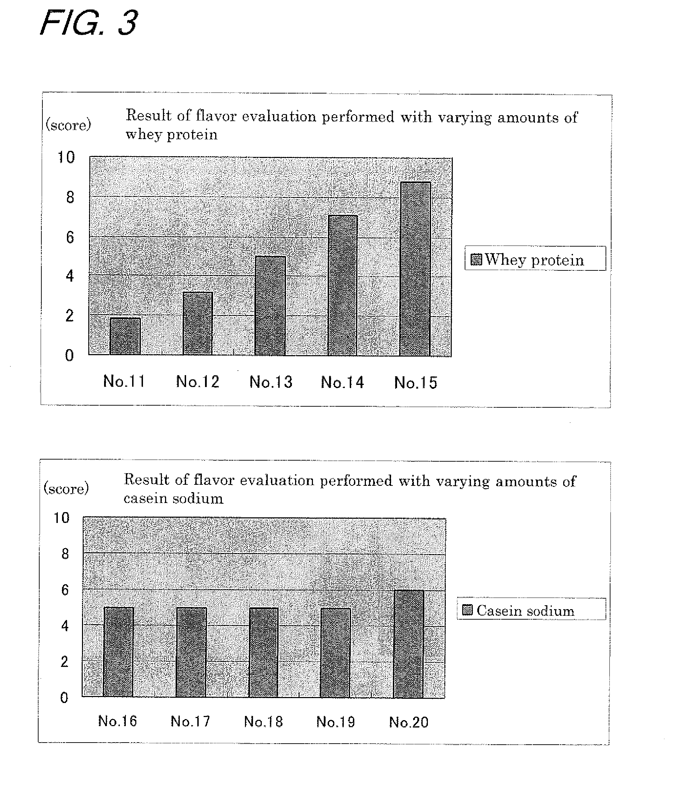

Samples were prepared by adding a milk fat, whey minerals and lactose in the amounts typically found in cow milk, provided that the amounts of a whey protein and a casein protein (casein sodium) were varied to the proportions indicated in Table 4 below; each of the samples was mixed with water in such an amount that the overall proportion of the sample would be 13 mass%, and the respective mixtures were homogenized in water to make milk compositions. The milk compositions were heat sterilized (125 °C x 20 min) to prepare sample Nos. 11 to 20, which were evaluated for their flavor. Their aftertaste was evaluated in 10 grades, with the sample having the worst aftertaste being given 10 scores. The results are shown in FIG. 3. The flavor of the samples deteriorated in proportion to the change in the amount of the whey protein.

Thus, it was found that the cause of the peculiar slack that developed in milk-added beverages after heat sterilization was a whey protein.

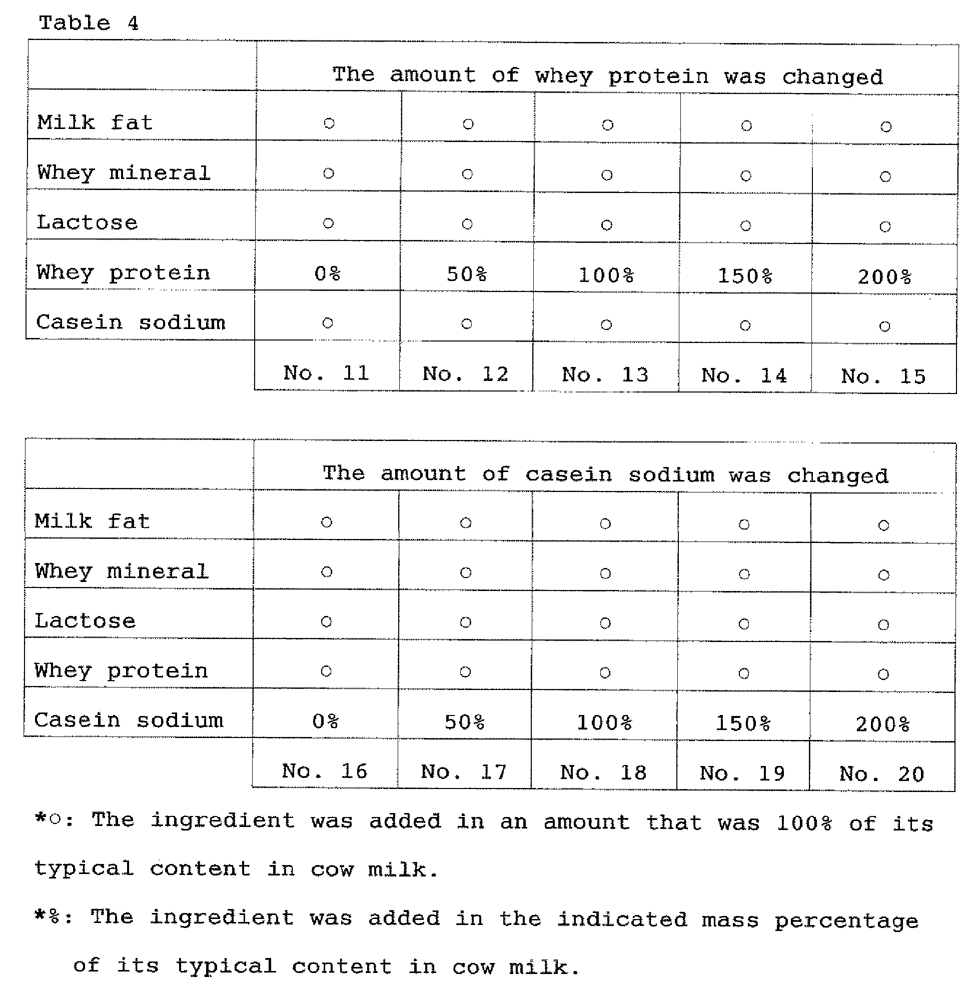

### Example 2

The ingredients listed in Table 5 were mixed in the proportions also indicated in Table 5, and water was added in an amount 100 times the total content of the starting materials, and the mixtures were homogenized in water to make milk compositions A and B. In a separate step, 20 g of roasted, ground coffee beans were extracted with pure water at 90 °C to make a coffee extract, to which suitable amounts of sodium bicarbonate (sodium hydrogencarbonate) and an emulsifier, as well as 70 g of sugar were added. Milk composition A or B was then added to give its content of 3.0 mass% in terms of a milk solids content, and the mixture was diluted with pure water to give a final total volume of 1000 mL; the resulting sample solutions were homogenized, filled into 190-g cans, and heat sterilized (125 °C x 20 min) to prepare sample A from milk composition A and sample B from milk composition B. The respective samples were evaluated for their flavor as in Example 1, where the unpleasantness of their aftertaste was evaluated in 5 grades, with the sample having the worst aftertaste being given 5 scores. The results are also shown in Table 5. Sample B containing no whey protein was improved in terms of the unpleasantness, thus giving a good result.

**Table 5. Recipes of Milk Compositions and Evaluation for Flavor of Beverages Using the Compositions**

| | Milk Composition A (mass%) | Milk Composition B (mass%) |
|---|---|---|
| Casein sodium | 0.63 | 0.79 |
| Whey protein | 0.16 | - |
| Lactose | 1.14 | 1.14 |
| Milk fat | 1.04 | 1.04 |
| Rating of flavor | 5 | 3.2 |

### Example 3

Milk proteins, fresh cream and lactose were dissolved in pure water at 90 °C to give milk compositions (1) to (6). In these compositions, the proportion of a whey protein in the total milk protein content was varied as indicated in Table 6 below. In a separate step, 30 g of roasted, ground coffee beans were extracted with pure water at 90 °C to make a coffee extract, to which suitable amounts of sodium bicarbonate (sodium hydrogencarbonate) and an emulsifier, as well as 60 g of sugar were added. Either one of milk compositions (1) to (6) was then added to give its content of 3.0 mass% in terms of a milk solids content, and the mixture was diluted with pure water to give a final total volume of 1000 mL; the resulting sample solutions were homogenized, filled into 190-g cans, and heat sterilized (125 °C x 20 min) to prepare samples (1) to (6) that corresponded to milk compositions (1) to (6), respectively. Note that each beverage was so conditioned that the total mass of the milk proteins would be constant (0.78 mass%). The results of flavor evaluation for Samples (1)-(6) are also shown in Table 6. The respective samples were evaluated for their flavor as in Examples 1 and 2; the unpleasantness of their aftertaste was evaluated in 5 grades, with the sample having the worst aftertaste being given 5 scores. It can be seen that the aftertaste became less unpleasing with decreasing whey protein content, thus producing better results.

**Table 6. Whey Protein/Total Milk Protein Ratio & Flavor Evaluation**

| Milk Composition No. or Sample No. | (1) | (2) | (3) | (4) | (5) | (6) |
|---|---|---|---|---|---|---|
| Ratio of Whey protein / total milk protein | 20% | 18% | 15% | 10% | 2% | 0% |
| Unpleasantness of aftertaste | 5 | 3.5 | 3 | 2 | 1 | 1 |

### Example 4

Milk proteins, fresh cream and lactose were dissolved in pure water at 90 °C to give a milk composition in which the ratio of a whey protein to the total milk protein was 18%. In a separate step, 10 g of tea leaves were extracted with pure water at 90 °C to make a tea extract, to which suitable amounts of sodium bicarbonate (sodium hydrogencarbonate), an emulsifier, sodium L-ascorbate and a flavoring, as well as 40 g of sugar were added. The milk composition was then added to give its content of 3.0 mass% in terms of a milk solids content, and the mixture was diluted with pure water to give a final total volume of 1000 mL; the resulting sample solution was homogenized, filled into a 190-g can, and heat sterilized (125 °C x 20 min) to prepare sample P. Note that this beverage was so conditioned that the total mass of the milk proteins would be 0.78 mass%, as in Example 3. Another milk composition was prepared by adjusting the whey protein/total milk protein ratio to 2% and it was used to prepare sample Q by the same procedure as described above. The two samples were evaluated for their flavor as in Example 3; they were milk-added tea beverages improved to become less disagreeable in aftertaste, and the degree of the improvement in sample Q was higher than that of sample P.

### Example 5

Milk proteins, fresh cream and lactose were dissolved in pure water at 90 °C to give a milk composition in which the ratio of a whey protein to the total milk protein was 18%. In the next step, 20 g of cocoa powder, amounts of an emulsifier and a flavoring, and 60 g of sugar were mixed with the milk composition which was added to give its content of 3.0 mass% in terms of a milk solids content, and the mixture was diluted with pure water to give a final total volume of 1000 mL; the resulting sample solution was homogenized, filled into a 190-g can, and heat sterilized (125 °C x 20 min) to prepare sample X. Note that this beverage was so conditioned that the total mass of the milk proteins would be 0.78 mass%, as in Example 3. Another milk composition was prepared by adjusting the whey protein/total milk protein ratio to 2%, and it was used to prepare sample Y by the same procedure as described above. The two samples were evaluated for their flavor as in Example 3; they were milk-added cocoa beverages improved to become less disagreeable in aftertaste, and the degree of the improvement in sample Y was higher than that of sample X.

## Claims

1. A milk composition that contains milk protein(s), in which the proportion of all of whey protein(s) in all of the milk protein ingredient(s) is from zero to 18 mass% (excluding the case where the milk ingredient(s) consist only of casein protein(s)).

2. The milk composition as recited in claim 1, wherein the proportion of all of the whey protein(s) in all of the milk protein ingredient(s) is from zero to 10 mass%.

3. The milk composition as recited in claim 1, wherein the proportion of all of the whey protein(s) in all of the milk protein ingredient(s) is from zero to 5 mass%.

4. The milk composition as recited in claims 1 to 3, which further contains one, two or more members of the group consisting of lactose, milk fats, and whey minerals.

5. A process for producing the milk composition as recited in any one of claims 1 to 4, which is obtained by homogenizing in water one, two or more members of the group consisting of casein proteins, whey proteins, lactose, milk fats, and whey minerals.

6. A milk-added beverage produced by using the milk composition as recited in any one of claims 1 to 4 as a starting material.

7. A milk-added beverage containing the milk composition as recited in any one of claims to 4.

8. The milk-added beverage as recited in claim 6 or 7, which has been subjected to heat sterilization.

9. The milk-added beverage as recited in any one of claims 6 to 8, which has a total whey protein content of no more than 0.46 mass%.

10. The milk-added beverage as recited in any one of claims 6 to 9, which is a milk-added coffee beverage with a coffee component.

11. A milk-added beverage, in which the proportion of all of whey protein(s) in all of milk protein ingredient(s) is no more than 18 mass%.

12. The milk-added beverage as recited in claim 11, which has a total whey protein content of no more than 0.46 mass%.

13. The milk-added beverage as recited in claim 11 or 12, which is a milk-added coffee beverage with a coffee component.

14. The milk-added coffee beverage as recited in any one of claims 11 to 13, which has been subjected to heat sterilization.

15. A process for producing a milk-added beverage, which comprises adjusting the proportion of whey protein(s) in all of milk protein ingredient(s) to no more than 18 mass%.

16. A method of preventing deterioration of the flavor of a milk-added beverage, which comprises adjusting the proportion of whey protein(s) in all of milk protein ingredient(s) to no more than 18 mass%.
